(19)

**Europäisches Patentamt**

**European Patent Office**

**Office européen des brevets**

(11)  **EP 1 681 335 A2**

(12)  **EUROPEAN PATENT APPLICATION**

| | |
|---|---|
| (43) Date of publication:<br>**19.07.2006  Bulletin 2006/29** | (51) Int Cl.:<br>***C09K 11/64*** *(2006.01)* |

(21) Application number: **05257577.6**

(22) Date of filing: **09.12.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **14.12.2004  GB 0427407**<br><br>(71) Applicant: **De La Rue International Limited Basingstoke, Hampshire RG22 4BS (GB)** | (72) Inventors:<br>• **Sugdon, Matthew Charles**<br>**Basingstoke**<br>**Hampshire RG24 7BQ (GB)**<br>• **Weller, Mark Timothy**<br>**Basingstoke**<br>**Hampshire RG24 8WE (GB)**<br><br>(74) Representative: **Hucker, Charlotte Jane**<br>**Gill Jennings & Every LLP**<br>**Broadgate House**<br>**7 Eldon Street**<br>**London EC2M 7LH (GB)** |

(54)  **Security material**

(57)  A material which undergoes a reversible colour change on exposure to UV light of a wavelength in the range 190-400 nm and which is selected materials having a sodalite structure, materials having a scapolite structure, materials having an altisite structure, materials having a kalborsite structure, and analogues and derivatives thereof, is used in security applications. The material may be included in a security device or an ink, incorporated into security documents such as banknotes, passports or identity cards.

EP 1 681 335 A2

**Description**

Field of the Invention

The present invention relates to the use of a material in security applications, including its incorporation into security documents such as banknotes, passports, identity cards and the like.

Background of the Invention

In today's digital society it has become much easier to counterfeit documents using relatively cheap desktop computers and inkjet printers. Therefore, the focus of much research carried out by companies in the field of security printing has been shifted to the combatting of what has been termed "digifeiting". In the past, a counterfeiter would have had to have access to expensive printing presses and would have needed to have been highly skilled in both photographic and printing techniques in order to produce a convincing counterfeit document. However, today, due to advances in technology such as colour photocopiers and printers, the counterfeiting of security documents such as identity cards, banknotes and passports has become easier and, consequently, much more prevalent. Therefore, it is a continuing and growing challenge in this field to identify new materials for use in security applications, which cannot be replicated using conventional desktop inkjet printing technology and which, consequently, cannot be easily copied by counterfeiters.

For instance, so-called "teller assist" features have been incorporated into security documents for more than 60 years, and are now found on nearly all security documents. The traditional teller assist feature is an invisible fluorescent print, which is viewed using a longwave UV (315-400 nm, typically 365 nm) lamp as commonly found in retail, banking and leisure environments. However, in recent years, the number of counterfeit documents incorporating UV fluorescent print features has significantly increased. Because of this, the presence of additional security features is now commonplace on security documents, examples of which include optically variable materials which change their colour depending on the angle at which they are viewed, metal threads, luminescent and magnetic materials and holograms.

However, there is still a need for further security features to be incorporated into such documents which, while being readily detectable using existing authenticity testing equipment, are extremely difficult for the counterfeiter to reproduce.

Summary of the Invention

A first aspect of the present invention is directed to the use in security applications of a material which undergoes a reversible colour change on exposure to UV light of a wavelength in the range 190-400 nm and which is selected from materials having a sodalite structure, such as Sodalites, Hackmanites, Hackmanite-type minerals and Tugtupites, materials having a scapolite structure, such as Scapolites, materials having an altisite structure, such as Altisites, materials having a kalborsite structure, such as Kalborsites, and analogues and derivatives thereof.

A second aspect of the present invention provides a security device selected from threads, foils and holograms, comprising a material as described above.

A third aspect of the present invention provides an ink comprising a material as described above and a vehicle. According to a fourth aspect of the present invention, a security document comprises such a security device and/or ink.

A fifth aspect of the present invention provides a method of testing the authenticity of a security document, as described above, which comprises exposing the document to UV light of a wavelength in the range 190-400 nm.

Description of the Invention

The phenomenon of controlled, reversible photochromism in response to light of specific wavelength is known as tenebrescence. Tenebrescent materials having a sodalite or related structure, in particular Hackmanites and Tugtupites, and Scapolites, Altisites, Kalborsites and their analogues, can display a reliable and reversible colour change on exposure to UV light and advantageously also possess chemical, thermal and photo-stabilities rendering them particularly suitable for use in security applications. Such materials contain anion sites embedded within a framework and can thus incorporate anion vacancies that can, in turn, temporarily trap an electron to produce the desired photochromic response.

Natural and synthetic materials having a sodalite, scapolite, altisite or kalborsite structure may be used in the present invention. For example, materials having a sodalite structure, such as Sodalites, Hackmanites, Hackmanite-type minerals and Tugtupites, materials having a scapolite structure, such as Scapolites, materials having an altisite structure, such as Altisites, and materials having a kalborsite structure, such as Kalborsites, and analogues and derivatives thereof, may be used. Hackmanites, Hackmanite-type minerals, and analogues and derivatives thereof are particularly preferred. Natural Hackmanites are available from a number of mineral reserves around the world, for instance in Russia, Canada, Greenland and Afghanistan. Synthetic materials, such as synthetic Hackmanites and analogues thereof, may be produced via a variety of methods including high temperature sintering methods and hydrothermal syntheses, which are well-known in the art. See, for instance, the methods described in GB-B-1187982. Synthetic materials are particularly preferred, as materials having more uniform, optimised properties may be prepared via synthetic routes.

A typical high temperature sintering process for the preparation of synthetic sodalite type materials comprises heating a mixture of an aluminosilicate source and combinations of metal salts to high temperature, for example 800°C, in an inert or reducing atmosphere. Suitable sources of aluminosilicates include zeolites, in particular Zeolite A, kaolin (clay) and nepheline ($NaSiAlO_4$). The metal salts used in the sintering process are chosen depending on the desired end product and may typically be selected from sodium sulphate ($Na_2SO_4$), sodium halides, sodium sulphite ($Na_2SO_3$) and sodium sulphide ($Na_2S$). The type of atmosphere used typically depends upon the metal salts employed in the process. For instance, an inert atmosphere is sufficient if the metal salt mixture contains a sulphide. However, if the metal salt mixture primarily comprises one or more sulphates for example, then a reducing atmosphere should be employed.

A typical hydrothermal synthesis of a synthetic sodalite material comprises forming a solution of sodium aluminate, sodium silicate and a combination of various metal salts, such as those listed above for the sintering method and including (in the case of synthetic Hackmanite production) sulphur-containing salts. The solution is typically heated under hydrothermal conditions at a temperature of 100-400°C for a time sufficient to produce an intermediate, which is then subjected to reducing conditions at a temperature of approximately 400-800°C to provide a synthetic sodalite material. It is, however, noted that when the sulphur-containing compound used in the hydrothermal synthesis is a sulphide, the final reduction step may merely involve heating the sodalite intermediate in a chemically inert atmosphere.

In addition, the temperatures involved in the methods of preparation described above are thought to influence the average particle size of the materials produced, and may therefore be adapted according to the desired product particle size.

Advantageously, many of the materials described herein as suitable for use in the present invention possess a white body colour which means that, when printed, the areas containing the tenebrescent material are invisible under normal light conditions until activated by UV light of the appropriate wavelength(s).

Preferably, some of the materials used in the present invention undergo a reversible colour change on exposure to longwave UV light of 315-400 nm, and more preferably light of approximately 365 nm. Therefore, they may be conveniently detected via exposure to UV light of the appropriate wavelength using existing authenticity testing equipment, such as the UV lamps commonly found in retail, banking and leisure environments. Such lamps typically emit UV light of approximately 365 nm.

Furthermore, some materials, alternatively or in addition to changing colour on exposure to longwave UV light, preferably change colour under shortwave UV light, ie. 200-280 nm, for instance UV light of approximately 254 nm. Depending on the UV response of the materials, therefore, they can potentially show a light pink colour under UV light of 365 nm and a red colour under UV light 254 nm for example, thereby showing two different colours. As a further alternative, materials which are activated by 365 nm UV light will typically also be activated by middle wave UV light, ie. UV light of wavelength 280-315 nm. This UV wavelength range is often encountered in mineralogy.

Equipment for the testing of materials which change colour under shortwave and/or middle wave UV light is not commonplace, and thus the counterfeiter may not recognise their presence, and thus would not know how to reproduce them. This leads, therefore, to an extremely high level of security. It follows that the inclusion of a material which exhibits a reversible colour change on exposure to both longwave and shortwave UV light imparts complex visual effects to security documents which are extremely difficult for the counterfeiter to reproduce. Furthermore, longwave UV and shortwave UV activated materials which show different colours upon activation ae combined together, subtractive colour mixing effects can be produced. For example, if material A turns blue under shortwave UV and longwave UV, and material B turns red under shortwave UV only, when the materials are combined into a security print and viewed under longwave UV only, the print will appear blue. However, if the print is viewed under shortwave UV it will appear purple due to the mixing of red and blue colours. This leads to highly secure colour effects.

In preferred tenebrescent materials suitable for use in the present invention, the UV-induced colour change in the material is effected quickly, and preferably within a few seconds, for instance between 1-5 seconds. The materials then typically return to their original colour on exposure to light of a wavelength longer than that which induced them to change colour initially. Preferably, they return to their original colour on exposure to daylight or artificial light. Alternatively or in addition, however, the colour may be thermally bleached. This can be achieved by heating the materials to an elevated temperature. Again, this reverse colour change preferably occurs within a reasonable time frame, more preferably within a few minutes and, most preferably, within around 1-20 seconds.

The tenebrescent materials may be used to achieve a wide variety of colour effects. The choice of which material to use for which particular security application is, therefore, generally a design choice which is dependent upon the desired colour effect. In more detail, on exposure to UV light of the appropriate wavelength, the colour of each material may change to one of a wide variety of colours, for instance pink, red, purple or blue. Additionally, prior to exposure to UV light, each material may be white or may be a colour selected from a wide variety such as pink, green, blue or purple. For instance, prior to exposure to UV, Tugtupites typically possess a pink body colour which darkens to a deep red on exposure to UV light. Therefore, materials which do not have a white body colour may provide so-called "visible-visible" colour changes on exposure to UV light of the appropriate wavelength, again providing further security features which the counterfeiter will find extremely difficult to reproduce. Furthermore, depending on the refractive index of the selected ink vehicle, the printed area may be transparent, opaque or semi-opaque. The tenebrescent materials used in the present invention may also be mixed with standard coloured pigments used to impart colour to inks. For example, a blue ink may be made to turn purple under UV light by incorporating a red tenebrescent material.

In addition to being tenebrescent, many of the materials suitable for use in the present invention may be fluorescent and can, therefore, impart an additional security feature to the document into which they are incorporated. The fluorescence may be enhanced still further by the addition of invisible fluorescent pigments which can impart a very strong fluorescent colour when viewed under UV light. This is additionally useful as it helps to locate the tenebrescent print.

Synthetic sodalite based materials may be prepared using conventional analogue preparation techniques involving replacement of one or more atoms within the sodalite structure. In more detail, the structure of sodalite materials may be considered to be made up of tetrahedral metal halide $M_4X$ units encapsulated within an inert framework, which itself typically consists of tetrahedral units of aluminate and silicate, for example, linked together through their vertices. The tetrahedral $M_4X$ units comprise M, a metal cation (usually monovalent sodium) and X is an anion (again usually monovalent and, in Hackmanite, generally chloride). Sodalites may, therefore, be considered as [framework]:[encapsulated alkali metal halide]. In general, sodalites are defined by a general formula such as that found in the Atlas of Zeolite Structure Types, W.M.Meier, D.H. Olsen and Ch. Baerlocher, Fourth Revised Edition 1996, Elsevier (Zeolites 17, 1996, 188). Compositionally, a general formulation is:

$$\{M, M'M'' \ldots \}_{8-x} \ \{T, T', T'' \ldots O_2\}_{12.} \ \{X, X', X''\}_{2-y}$$

where M,M',M" represents one or more mono or divalent metal ions such as those of the alkali metals, alkaline earth metals, Ag, Cd, Zn and T1; T,T',T"are one or more elements forming $TO_4$ tetrahedral units that can be built into the sodalite framework such as Si, A1, Ga, Ge, P, B, Zn, Co and As; and X,X,' X" represents one or more anionic species such as $Cl^-$, $Br^-$, $I^-$, $WO_4^{2-}$, $CrO_4^{2-}$, $SO_4^{2-}$, $SO_3^{2-}$, $SeO_4^{2-}$ $TeO_3^{2-}$, $ClO_3^-$, $ClO_4^-$, $ReO_4^-$, $S^{2-}$ $Se^{2-}$, $Te^{2-}$ , $O^{2-}$, $S_2^{2-}$, $S_2^-$, $S_3^{2-}$, $S_3^-$ and $Se_2$ Hackmanite is typically thought of as a variety of sodalite having the general structure $Na_8$ $[SiAlO_4]_6(Cl, S)_{2-x}$, Tugtupites may be thought of as a variety of sodalite having the general structure $Na_8$ $[Al_2Be_2Si_8O_{24}]$ $(Cl, S_n)_2$.

Accordingly, the replacement of anions and/or cations within the framework can produce sodalite-type analogues with different colours. For example, one or more sodium or calcium cations in a conventional sodalite structure may be replaced with lithium or potassium, for example, while one or more chloride anions may be replaced with bromide or iodide anions using conventional techniques. Substitution of chloride by iodide or bromide typically alters the UV activated colour from magenta to purple or blue. In addition, tenebrescent derivatives of materials such as Sodalite and, in particular, Hackmanite, may be prepared using techniques standard in the art. However, as the sulphur in Hackmanite is thought to be at least partly responsible for its tenebrescent properties, at least some sulphur or selenium containing species should be retained within the structure of synthetic Hackmanite analogues and derivatives.

Synthetic Scapolites, Altisites and Kalborsites may also be made using conventional techniques well known in the art. Scapolites have the general structure $(Na,Ca)_4(Al,SiO_2)_{12}(Cl,CO_3,S_n,SO_4)$, while Altisites are based upon the structure $Na_3K_6(Ti_2Al_2Si_8O_{26})Cl_3$. Kalborsites, in particular those of the so-called Edingtonite type, are based upon the structure $K_2Al_2Si_3O_{10}.KCl$.

The tenebrescent materials described herein can be included in a variety of security devices including threads, foils or holograms. In the context of the present invention, the term "security device" is understood to mean any device or feature which is contained within or applied on to an article such as a document, and which renders the article secure. Alternatively, the tenebrescent materials may be incorporated into inks comprising conventional vehicles known in the art, in amounts typically employed in this field.

Also, if the material is to be applied in the form of an ink, it is typically provided in the form of particles, the average size of which will depend on the particular printing method to be employed. For example, particles having an average particle size of less than 40 $\mu$m are generally suitable for use in screen printing. However, if the material is to be applied by a letter press printing process, then it is preferable that the material is provided in the form of particles having an average size of less than 5 $\mu$m. Further, if the material is to be applied to the security document via offset litho-printing, then it will preferably have an average particle size of less than 1 $\mu$m. The average particle size of the materials may be determined by techniques conventionally known in this field, including scanning election microscopy (SEM).

The form of the materials should, of course, allow their ready incorporation into such devices and inks by methods conventionally known in the field of security.

The tenebrescent materials find use in a wide variety of security applications. Which material is used in which application will typically depend on the properties of the material. For instance, the materials may be incorporated into documents such as banknotes, identity cards, passports, driving licences and tickets for air travel and leisure events as print features, or in the embedded security threads now commonly found in banknotes, for example.

The materials are advantageously used in these types of security document because they typically do not fade in sunlight, degrade in humidity or dissolve in common solvents. Additionally, the materials are generally resistant to all standard authenticity tests to which documents such as banknotes are subjected, including tests involving contact with acids. In this regard it is noted that materials having a sodalite structure typically only dissolve in strong acids, for example of pH < 1, and strong bases of pH > 12. Furthermore, synthetic Hackmanite materials described herein have been tested using the standard Xenotest and have been observed to have a more or less identical appearance after 400 hours. Also, the thermal stability of natural and synthetic Hackmanites is typically at least 400°C.

The use of tenebrescent materials in authenticity marking on high value consumer goods which face widespread counterfeiting, such as liquor and designer clothing, is also envisaged in the present invention.

For enhanced security, as discussed above, complex visual effects may be achieved which are difficult for the counterfeiter to replicate by using more than one of the above-described tenebrescent materials. Additionally, the tenebrescent materials may be used in conjunction with one or more colour pigments, again to produce interesting colour effects which, again, will enhance the security of such documents.

Of course, the greater the number of security features introduced into security documents, the more difficult it will be for the counterfeiter to convincingly reproduce such documents. Accordingly, the materials herein described may be used in conjunction with any of the wide variety of other types of security features known in the art, for instance optically variable features which change their colour depending on the angle at which they are viewed, metal threads, coding features, magnetic, luminescent and fluorescent materials, and holograms, to name but a few. The tenebrescent materials may also be incorporated into any of the above-listed types of security features. For instance, they may be incorporated into an ink together with one or more optically variable pigments to form an optically variable ink or "OVI" having tenebrescent properties. The tenebrescent materials may also be incorporated into inks containing any other standard security materials.

The present invention will now be described with reference to the following Examples.

Example 1

Synthetic sodalite materials were prepared via sintering in a reducing atmosphere.

A reaction mixture of molar ratio 1 Zeolite A: 3 NaCl: y $Na_2SO_4$ (in which y is in the range 0.25-1; see Table) was ground together and transferred to an alumina boat. The mixture was heated at 800°C in a tube furnace whilst under a flow of 5% hydrogen in nitrogen for 24 hours to provide a synthetic sodalite material.

This method was then repeated using $Na_2SO_3$, $Na_2S.9H_2O$ and $Na_2S_2O_3$ instead of $Na_2SO_4$ as the source of sulfur.

Example 2

Synthetic sodalite materials were prepared via sintering in an inert atmosphere.

A mixture of molar ratio 1 Zeolite A: 3 NaCl: y $Na_2S$ (in which y is 0.5 or 1; see Table) was ground thoroughly in a glove box and transferred to an alumina boat. The mixture was then heated at 800°C in a tube furnace whilst under a flow of argon for 24 hours.

A further series of experiments used $Na_2S_4$ as a sulphur source, as presented in Table 1.

All of the sample materials so-produced were then irradiated with 254 nm (using a Mineralight available from UV Products) and 365 nm UV light (using a standard UV light, such as those used by bank tellers).

The results are presented in the following Table.

| Molar ratio of Starting Materials 1 Zeolite A: 3 NaCl with | Time for Tenebrescence/s 254nm | 365nm | Colour after UV |
|---|---|---|---|
| 1 $Na_2SO_4$ | 2 | - | Pink |
| 0.75 $Na_2SO_4$ | 2 | - | Pink |
| 0.65 $Na_2SO_4$ | 2 | 20 | Pink |

(continued)

| Molar ratio of Starting Materials 1 Zeolite A: 3 NaCl with | Time for Tenebrescence/s 254nm | 365nm | Colour after UV |
|---|---|---|---|
| 0.6 $Na_2SO_4$ | 2 | 20 | Pink |
| 0.55 $Na_2SO_4$ | 2 | 20 | Pink |
| 0.45 $Na_2SO_4$ | 2 | - | Pink |
| 0.4 $Na_2SO_4$ | 2 | 20 | Pink |
| 0.3 $Na_2SO_4$ | 2 | 20 | Pink |
| 0.25 $Na_2SO_4$ | 5 | - | Pink |
| 0.1 $Na_2SO_4$ | 20 | - | Pink |
| 1 $Na_2S.9H_2O$: 0.65 $Na_2SO_4$ | 2 | - | Pink |
| 0.5 $Na_2S.9H_2O$: 0.65 $Na_2SO_4$ | 2 | - | Pink |
| 1 $Na_2S.9H_2O$ | 2 | - | Pink |
| 0.5 $Na_2S.9H_2O$ | 2 | 60 | Pink |
| 1 $Na_2S_2O_3$ | 5 | - | Pink |
| 0.75 $Na_2S_2O_3$ | 30 | - | Pink |
| 0.65 $Na_2S_2O_3$ | 30 | - | Pink |
| 2 $Na_2SO_3$ | 5 | - | Pink |
| 1 $Na_2SO_3$ | 5 | - | Pink |
| 0.5 $Na_2S_4$ | 5 | - | Pink |
| (- = no colour after exposure to UV, all samples were approximately 1cm from UV source) | | | |

Example 3

This Example provides a sample screen printing ink formulation illustrating the typical quantities of ink components present in an ink containing a tenebrescent material in accordance with the present invention. The amounts are given in weight %.

| | |
|---|---|
| Tenebrescent Pigment | 25% |
| PVC/PVA copolymer | 21% |
| Methyl/butyl methacrylate | 7% |
| Cyclohexanone | 10.5% |
| Aromatic hydrocarbon (Boiling Point 160-180°C) | 32% |
| Aromatic hydrocarbon (Boiling point 156-214°C) | 4% |
| Dioctyl phthalate | 0.5% |

**Claims**

1.   Use in security applications of a material which undergoes a reversible colour change on exposure to UV light of a wavelength in the range 190-400 nm and which is selected from materials having a sodalite structure, such as Sodalites, Hackmanites, Hackmanite-type minerals and Tugtupites, materials having a scapolite structure, such as Scapolites, materials having an altisite structure, such as Altisites, materials having a kalborsite structure, such as Kalborsites, and analogues and derivatives thereof.

2.   Use according to claim 1, wherein the material is a synthetic material.

3.   Use according to claim 1 or claim 2, wherein the material is a Hackmanite, a Hackmanite-type mineral, a Hackmanite analogue or a derivative thereof.

4. Use according to any preceding claim, wherein the material undergoes a reversible colour change on exposure to UV light of a wavelength in the range 315-400 nm and/or on exposure to UV light of a wavelength in the range 200-280 nm.

5. Use according to any preceding claim, wherein the material undergoes a reversible colour change on exposure to UV light of a wavelength of approximately 365 nm and/or on exposure to UV light of a wavelength of approximately 254 nm.

6. Use according to claim 5, wherein the material undergoes a reversible colour change on exposure to UV light of a wavelength of approximately 365 nm.

7. Use according to any preceding claim, wherein the material reverts to its original colour on exposure to daylight or artificial light.

8. Use according to any preceding claim, wherein the material is provided in the form of particles having an average size of less than 5 $\mu$m.

9. Use according to any preceding claim, wherein the material is used in conjunction with at least one other material as defined in any of claims 1-8.

10. A security device selected from threads, foils and holograms, comprising a material as defined in any of claims 1-8.

11. An ink comprising a material as defined in any of claim 1-8 dispersed or dissolved in a vehicle.

12. A security document comprising a security device as defined in claim 10 and/or an ink as defined in claim 11.

13. A security document according to claim 12 selected from banknotes, passports and identity cards.

14. A method of testing the authenticity of a security document as defined in claim 12 or claim 13, comprising exposing the document to UV light of a wavelength in the range 190-400 nm.

15. A method according to claim 14, comprising exposing the document to UV light of a wavelength in the range 315-400 nm and/or UV light of a wavelength in the range 200-280 nm.

16. A method according to claim 15, wherein the security document is exposed to UV light of a wavelength of approximately 365 nm.